(19) **Europäisches Patentamt European Patent Office Office européen des brevets**

(11) **EP 2 448 875 B1**

(12) **FASCICULE DE BREVET EUROPEEN**

(45) Date de publication et mention de la délivrance du brevet:
**20.03.2013 Bulletin 2013/12**

(21) Numéro de dépôt: **10730425.5**

(22) Date de dépôt: **29.06.2010**

(51) Int Cl.:
*C03C 3/091* *(2006.01)*   *C03C 3/076* *(2006.01)*
*C03C 3/095* *(2006.01)*   *C03C 8/24* *(2006.01)*
*H01M 8/02* *(2006.01)*

(86) Numéro de dépôt international:
**PCT/EP2010/059236**

(87) Numéro de publication internationale:
**WO 2011/000847 (06.01.2011 Gazette 2011/01)**

(54) **COMPOSITIONS DE VERRE POUR JOINTS D'APPAREILS FONCTIONNANT À DE HAUTES TEMPÉRATURES ET PROCÉDÉ D'ASSEMBLAGE LES UTILISANT.**

**GLASZUSAMMENSETZUNGEN FÜR VERBINDUNGEN IN VORRICHTUNGEN MIT HOHER BETRIEBSTEMPERATUR UND MONTAGEVERFAHREN DAFÜR**

**GLASS COMPOSITIONS FOR JOINTS OF DEVICES OPERATING AT HIGH TEMPERATURES, AND ASSEMBLY METHOD USING SAME**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **03.07.2009 FR 0954613**

(43) Date de publication de la demande:
**09.05.2012 Bulletin 2012/19**

(73) Titulaire: **Commissariat à l'Énergie Atomique et aux Énergies Alternatives 75015 Paris (FR)**

(72) Inventeurs:
• **NONNET, Hélène**
  **F-84260 Sarrians (FR)**
• **GRANDJEAN, Agnès**
  **F-30330 Saint-Marcel De Careiret (FR)**
• **VALLAT, Charlène**
  **F-30150 Saint-Genies De Comolas (FR)**
• **COILLOT, Daniel**
  **F-62590 Oignies (FR)**
• **MONTAGNE, Lionel**
  **F-62840 Laventie (FR)**

(74) Mandataire: **Ilgart, Jean-Christophe et al BREVALEX 95 rue d'Amsterdam 75378 Paris Cedex 8 (FR)**

(56) Documents cités:
**JP-A- 3 177 332    US-A- 5 196 277
US-A1- 2003 040 420    US-A1- 2008 142 148**

**Description**

**DOMAINE TECHNIQUE**

L'invention concerne des compositions de verre, et plus particulièrement des compositions de verre pour des joints d'appareils fonctionnant à hautes températures, par exemple de 600 à 1000°C notamment de 700 à 900°C.

Plus précisément, l'invention concerne des compositions de verre pour des joints d'un électrolyseur haute température (« EHT » ou « HTE » c'est-à-dire « High-Temperature Electrolyzer » en langue anglaise) ou d'une pile à combustible haute température (« SOFC » ou « Solid Oxide Fuel Cell » en langue anglaise) comprenant un empilement de cellules élémentaires.

L'invention concerne, en outre, un procédé d'assemblage d'au moins deux pièces mettant en oeuvre lesdites compositions de verre. Ces pièces sont notamment des pièces qui entrent dans la constitution d'un électrolyseur haute température ou d'une pile à combustible haute température (« SOFC » ou « Solid Oxide Fuel Cell » en langue anglaise).

Le domaine technique de l'invention peut ainsi être défini de manière générale comme celui des joints de verre dont la fonction est d'assurer l'étanchéité entre les différents compartiments d'appareils dans lesquels sont véhiculés des fluides à de hautes températures. Plus particulièrement, le domaine technique de l'invention est celui des joints de verre assurant l'étanchéité entre les différents compartiments dans lesquels sont acheminés et produits les gaz dans les électrolyseurs haute température ou les piles à combustible haute température, notamment ceux comprenant un empilement de cellules élémentaires qui fonctionnent généralement entre 600 et 1000°C , en particulier entre 700°C et 900°C.

**ÉTAT DE LA TECHNIQUE ANTÉRIEURE**

Dans les électrolyseurs haute température, l'électrolyse de l'eau à haute température est réalisée à partir d'eau vaporisée. La fonction d'un électrolyseur haute température est de transformer la vapeur d'eau en hydrogène et en oxygène selon la réaction suivante : $2H_2O_{(g)} \rightarrow 2H_2 + O_2$.

Cette réaction est réalisée par voie électrochimique dans les cellules de l'électrolyseur.

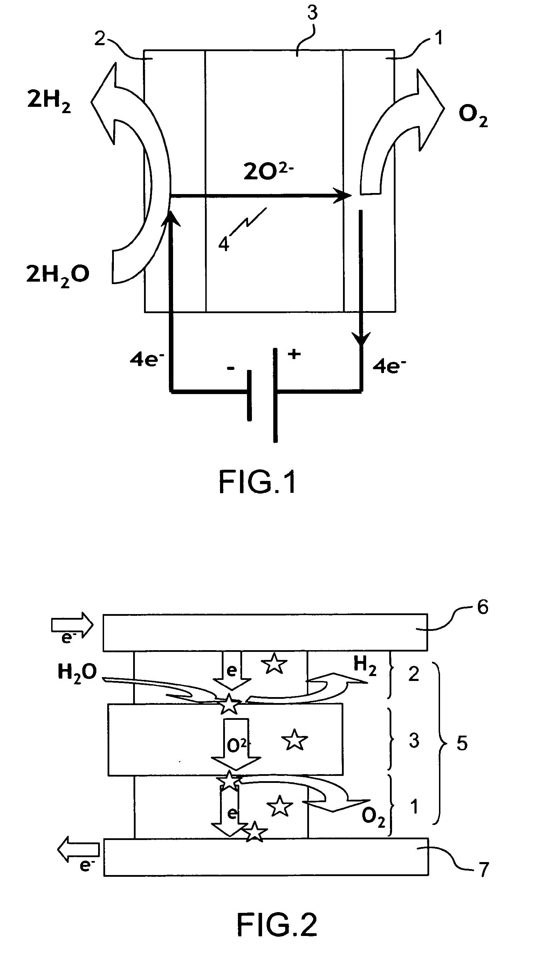

Chaque cellule élémentaire est, comme cela est montré sur la figure 1, constituée de deux électrodes, à savoir une anode (1) et une cathode (2), prenant en sandwich un électrolyte solide généralement sous forme de membrane (3).

Les deux électrodes (1, 2) sont des conducteurs électroniques, et l'électrolyte (3) est un conducteur ionique.

Les réactions électrochimiques se font à l'interface entre chacun des conducteurs électroniques et le conducteur ionique.

A la cathode (2), la demi-réaction est la suivante : $2H_2O + 4\ e^- \rightarrow 2H_2 + 2O^{2-}$ ;
Et à l'anode (1), la demi-réaction est la suivante: $2O^{2-} \rightarrow O_2 + 4e^-$.

L'électrolyte (3), placé entre les deux électrodes, est le lieu de migration des ions $O^{2-}$ (4), sous l'effet du champ électrique créé par la différence de potentiel imposée entre l'anode (1) et la cathode (2).

Un réacteur élémentaire, représenté sur la figure 2, est constitué d'une cellule élémentaire (5) telle que décrite plus haut, avec une anode (1), un électrolyte (3), et une cathode (2) et de deux connecteurs mono-polaires ou plus exactement deux demi-interconnecteurs (6, 7) qui assurent les fonctions électrique, hydraulique et thermique. Ce réacteur élémentaire est appelé module.

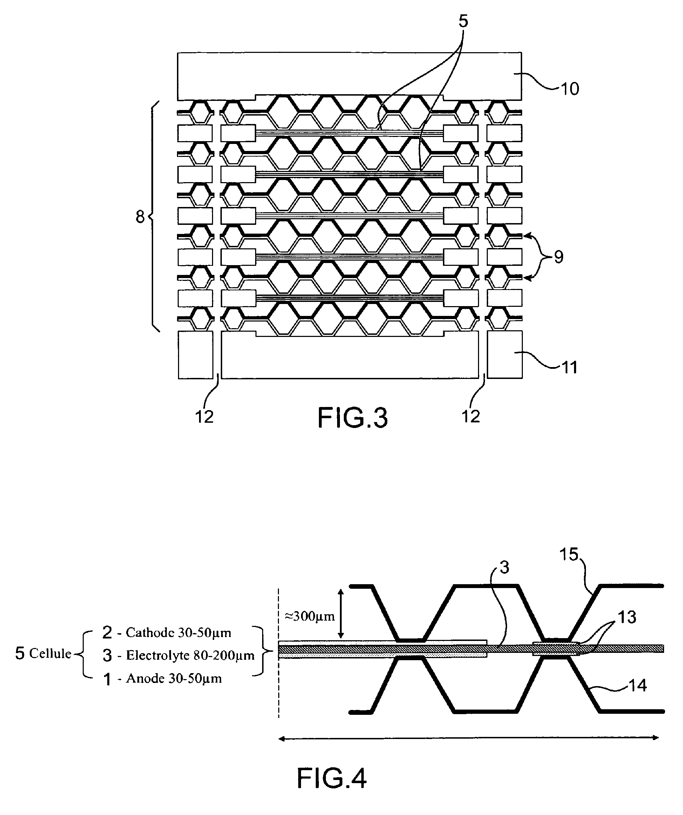

Pour augmenter les débits d'hydrogène et d'oxygène produits, et comme cela est montré sur la figure 3, plusieurs modules élémentaires sont empilés (8), les cellules (5) étant alors séparées par des interconnecteurs ou plaques d'interconnexion bipolaires (9) .

L'ensemble des modules (8) est positionné entre deux plaques d'interconnexion supérieure (10) et inférieure (11) qui sont porteuses des alimentations électriques et des alimentations en gaz (12). On parle alors d'empilement ou de « stack » (figure 3).

Il existe deux concepts, configurations, architectures pour les empilements ou « stacks » :

- les stacks tubulaires, dans lesquels les cellules sont des tubes, et
- les stacks planaires, dans lesquels les cellules sont fabriquées sous forme de plaques comme sur la figure 3.

Dans l'architecture planaire, les cellules et les interconnecteurs sont en contact en de nombreux points. La fabrication de l'empilement, du stack, est soumise à des tolérances fines quant à la planéité des cellules afin d'éviter des pressions de contact trop élevées et une distribution inhomogène des contraintes, qui peuvent conduire à la fissuration des cellules.

Les joints d'étanchéité dans un empilement, stack, ont pour objectifs d'empêcher une fuite d'hydrogène de la cathode vers les anodes voisines, d'empêcher une fuite d'oxygène de l'anode vers les cathodes voisines, d'empêcher une fuite d'hydrogène vers l'extérieur de l'empilement, stack, et enfin de limiter les fuites de vapeur d'eau des cathodes vers les anodes.

Dans le cadre du développement d'empilement pour l'électrolyse à haute température (« EHT »), et comme cela est montré sur la figure 4, des joints étanches aux gaz (13) sont ainsi réalisés entre les cellules (5) d'électrolyse planaires, constituées chacune d'une tricouche céramique Anode / Electrolyte / Cathode, et les interconnecteurs ou plaques d'interconnexion métalliques (9).

Il est à noter que les dimensions en μm données sur la Figure 4 ne sont données qu'à titre d'exemples.

Plus précisément, un joint est réalisé d'une part entre la surface inférieure de chaque cellule (5) et le demi-interconnecteur supérieur (14) de la plaque d'interconnexion située en-dessous de la cellule, et d'autre part entre la surface supérieure de chaque cellule et le demi-interconnecteur inférieur (15) de la plaque d'interconnexion située au-dessus de la cellule (5).

Ces joints (13) doivent généralement présenter un débit de fuite sous air inférieur à $10^{-3}$ Nml/min/mm entre 700°C et 900°C sous un différentiel de pression de 20 à 500 mbar.

Outre cette fonction d'étanchéité, le joint peut, dans certains cas, avoir des fonctions secondaires d'assemblage et de conduction électrique. Pour certaines architectures d'empilements, une pièce en céramique, appelée support de cellule, peut être placée entre les cellules et les interconnecteurs ; et des joints étanches aux gaz sont alors également requis avec cette pièce support de cellule.

Plusieurs solutions d'étanchéité sont actuellement étudiées, à savoir : les céments ou adhésifs céramiques, les joints en verres ou en vitrocéramiques, les joints métalliques en compression, les joints au mica en compression, les joints brasés et des solutions mixtes faisant appel à plusieurs de ces techniques.

Ces joints doivent permettre d'assurer les étanchéités entre la chambre cathodique et l'extérieur, entre la chambre anodique et l'extérieur, et entre les deux chambres, et d'éviter ainsi les fuites de gaz entre les deux chambres et vers l'extérieur.

Comme cela a déjà été précisé plus haut, nous nous intéressons plus particulièrement dans la présente aux joints en verre.

Les verres utilisés pour ces joints peuvent être soit en verre simple, soit en verre cristallisable aussi appelé vitrocéramique, soit encore en un mélange de ces deux verres, soit encore en verre simple auquel on ajoute des particules céramiques.

La plupart des verres utilisés pour ces joints se trouvent généralement sous une forme solide à la température d'utilisation à savoir généralement entre 600°C et 1000°C, notamment entre 700°C et 900°C, par exemple 850°C. Ces joints sont qualifiés de joints « durs » et présentent généralement une viscosité supérieure à 109 Pa.s à 850°C.

La contrainte principale à respecter dans cette situation est de formuler un joint possédant un coefficient de dilatation/expansion thermique « CET » ou (« Thermal expansion coefficient » ou « TEC » en langue anglaise), adapté aux autres éléments de la jonction, notamment aux pièces en céramiques et métalliques.

En ce qui concerne les verres simples, des compositions $SiO_2$-CaO-$B_2O_3$;-$Al_2O_3$ sont étudiées dans le document [1], des compositions BaO-$Al_2O$;-$SiO_2$ sont décrites dans le document [2] et dans le document [3], et enfin des compositions $LiO_2$-$Al_2O_3$-$SiO_2$ sont mentionnées dans le document [4], mais il est difficile avec ces compositions d'atteindre des CET adaptés aux jonctions.

Les verres vitrocéramiques sont, quant à eux, de manière générale, présentés comme étant plus résistants chimiquement et mécaniquement grâce au contrôle de la cristallisation du verre à l'aide d'agents nucléants et de traitements thermiques particuliers.

Les paramètres à maîtriser pour ces verres vitrocéramiques sont la formulation du verre et des cycles thermiques pour parvenir à former la ou les phase(s) cristalline(s) possédant les propriétés recherchées.

Ainsi des compositions de verres vitrocéramiques de type LAS ($LiO_2$-$Al_2O$;-$SiO_2$) sont-elles décrites dans le document [4], des compositions de type BAS (BaO-$Al_2O_3$-$SiO_2$) sont étudiées dans les documents [2] et [6], des compositions de type BCAS (Baryum Calcium Aluminosilicate) sont mentionnées dans les documents [7] et [8], et enfin des compositions $SiO_2$-CaO-MgO-$Al_2O_3$ font l'objet du document [9].

Cependant, la mise au point des formulations et des traitements thermiques pour les verres vitrocéramiques reste délicate car le matériau de jonction évolue avec le temps, avec la modification des phases cristallines et du fait de la création d'interfaces entre les matériaux en contact. Le développement industriel de ce type de verres vitrocéramiques reste donc complexe.

Enfin, l'addition de particules céramiques de différentes tailles et formes à des verres simples permet de contrôler et d'ajuster la viscosité et le CET du matériau de scellement [10, 11]. Le point délicat réside en la présence de phase vitreuse en grande quantité qui peut poser des problèmes de corrosion ou d'évaporation à haute température.

Outre les joints « durs » décrits plus haut qui se présentent sous forme solide à la température de fonctionnement, des compositions SrO-$La_2O_3$-$Al_2O_3$ -$B_2O_3$-$SiO_2$, qui permettent d'obtenir un état fluide du verre aux températures de fonctionnement sont divulguées dans le document [5]. Ces compositions permettent d'accommoder les grandes différences de CET, mais les formulations développées dans ce document ne se montrent pas assez résistantes d'un point de vue mécanique, justement en raison de cette trop grande fluidité du verre, pour pouvoir maintenir l'étanchéité face aux différences de pressions imposées.

Le document [12] décrit une cellule sodium-soufre qui comprend un tube en électrolyte solide, une bague isolante qui isole électriquement un compartiment d'électrode positive d'un compartiment d'électrode négative, et un intervalle de 100 à 500 μm entre le tube en électrolyte solide et la bague isolante et une brasure en verre qui remplit cet intervalle pour fixer la bague isolante au tube en électrolyte.

Pour réaliser l'assemblage entre le tube en électrolyte solide et la bague isolante, on insère la partie inférieure du tube en électrolyte dans la bague isolante, on insère une bague en verre dans l'intervalle formé entre le tube en électrolyte solide et la bague isolante, puis on chauffe et on fait fondre la bague en verre dans un four électrique.

Le verre de brasure est un verre aluminoborosilicaté, par exemple comprenant les 4 ingrédients suivants en % en poids :

- 0 à 80 % en poids de $SiO_2$ ;
- 0 à 30% en poids d'$Al_2O_3$ ;
- 0 à 80% en poids de $B_2O_3$ ;
- et 0 à 30% en poids de $Na_2O$.

Dans le Tableau 1 du document [12], sont donnés des exemples de verres de brasure $SiO_2$/$Al_2O_3$/$B_2O_3$/$Na_2O$. Il est à noter que les compositions des verres du Tableau 1 sont exprimées en % en poids.

On note, en outre, que la composition E du Tableau 1 n'est pas normée à 100 et que, de ce fait, toute comparaison avec cette composition du document [12] est impossible.

La composition (A) revendiquée diffère des compositions de ce document, en particulier en ce qui concerne la teneur en $B_2O_3$.

En outre, les verres décrits dans US-A-5,196,277 [12] sont des verres de soudure pour des applications d'étanchéité basse température, à la différence des compositions (A) et (B) revendiquées qui sont spécifiquement formulées pour des applications d'étanchéité aux hautes températures et qui possèdent des propriétés, en particulier de viscosité mais également de faible réactivité vis-à-vis des matériaux au contact, adaptées à cette application.

Il ressort de ce qui précède qu'il n'existe pas à l'heure actuelle de composition de verre donnant satisfaction pour une utilisation dans des joints d'étanchéité pour des appareils fonctionnant à haute température tels que des électrolyseurs haute température ou des piles à combustible à haute température.

Il existe donc un besoin pour une composition de verre qui donne un joint résistant chimiquement et mécaniquement, possédant notamment des propriétés mécaniques lui permettant de s'adapter aux CET parfois très différents des matériaux à assembler.

Il existe aussi un besoin pour une composition de verre qui ne soit pas sujette à des phénomènes de corrosion ou d'évaporation à haute température.

Il existe encore un besoin pour une telle composition de verre qui ne présente pas ou peu d'interactions avec les matériaux à assembler.

Il existe, en outre, un besoin pour une composition de verre qui puisse être préparée de manière fiable, facile et reproductible sans faire notamment appel à des cycles thermique complexes.

Il existe enfin un besoin pour une telle composition de verre dont toutes les propriétés restent stables avec le temps en particulier dans des conditions de haute température.

**EXPOSÉ DE L'INVENTION**

Le but de la présente invention est de fournir une composition de verre qui réponde entre autres aux besoins énumérés plus haut.

Le but de la présente invention est encore de fournir une composition de verre qui ne présente pas les inconvénients, défauts, limitations et désavantages des compositions de verre de l'art antérieur et qui résolve les problèmes des compositions de l'art antérieur.

Ce but, et d'autres encore, sont atteints, conformément à l'invention par une composition de verre caractérisée en ce qu'elle est choisie dans le groupe constitué par une composition de verre (A) constituée en pourcentages molaires par :

- 72,3% de $SiO_2$ ;
- 7,8% de $B_2O_3$ ;
- 14% de $Na_2O$
- 5,9% de $Al_2O_3$

ou bien par :

- 7,3% de $SiO_2$
- 7.8% de $B_2O_3$
- 12% de $Na_2O$
- 5,9 % de $Al_2O_3$

et par une composition de verre (B) constituée en pourcentages molaires par :

- 63 à 76% de $SiO_2$ ;
- 5 à 12% de $ZrO_2$ ;
- 0 à 12 % de $B_2O_3$ ;
- 0 à 2% de $La_2O_3$ ;
- 11 à 14% de $Na_2O$ ;
- 3 à 5% de $K_2O$.

Il est bien évident que le total des constituants de chacune des compositions de verre selon l'invention est égal à 100% en pourcentages molaires.

Les compositions de verres selon l'invention peuvent être définies comme des compositions de verre simple c'est-à-dire qu'elles comprennent peu ou pas de phase cristalline, qu'elles ne sont constituées que d'une phase vitreuse à l'issue de leur élaboration et avant tout (autre) traitement thermique, tout maintien à une température élevée.

En outre, généralement, les compositions de verre selon l'invention comprennent encore moins de 50% en poids de phase cristalline et de préférence 0% en poids de phase cristalline après leur maintien à une température de 600 à 1000°C, notamment de 700°C à 900°C pendant une durée supérieure à 1 heure.

Autrement dit, les compositions de verre selon l'invention, et les joints comprenant ces compositions restent également de nature vitreuse, c'est-à-dire qu'elles présentent peu ou pas de cristallisation du verre, après maintien du joint à des températures élevées telles que les températures de fonctionnement des électrolyseurs ou des piles à combustible haute température qui sont généralement de 600°C à 1000°C, notamment de 700°C à 900°C , et par exemple de 800°C à 850°C, même pendant de longues durées par exemple pouvant aller jusqu'à 1 mois ou 720 heures.

Les compositions selon l'invention peuvent être ainsi définies comme étant des compositions « non dévitrifiantes » c'est-à-dire des compositions qui restent dans leur état essentiellement vitreux initial, même après exposition à des températures élevées.

De plus, les compositions selon l'invention sont telles que leur viscosité se situe dans la plage de $10^7$ à $10^8$ dPa.s dans la plage de 700°C à 900°C, ce qui permet au verre d'être dans un état viscoplastique conférant au joint, d'une part, une certaine souplesse pour pouvoir s'adapter aux coefficients de dilatation thermique des différents matériaux avec lesquels il est en contact, et d'autre part, une rigidité satisfaisante pour pouvoir supporter les différences de pressions imposées entre les différents compartiments. De manière étonnante, les compositions de verre selon l'invention assurent ainsi un équilibre optimal entre la souplesse et la rigidité.

En outre, les compositions selon l'invention présentent également un faible niveau d'interaction avec les matériaux avec lesquels elles se trouvent en contact qu'ils s'agissent de céramiques telles que les céramiques type « YSZ », ou « MACOR® » ; de métaux et alliages tels que les aciers à forte teneur en chrome (Crofer®), les alliages de nickel à forte teneur en chrome (Haynes® 230) ; ou bien encore d'électrolytes tels que l'électrolyte de type LSM ; ou encore de Cermets tels que le Cermet Ni.

Les excellentes propriétés des compositions selon l'invention sont très stables au cours du temps, pendant des durées pouvant atteindre jusqu'à un mois, à haute température, par exemple de 600°C à 1000°C, et notamment de 700°C à 900°C.

Les compositions selon l'invention ne sont pas décrites dans l'art antérieur tel que représenté par les documents cités plus haut, ne présentent pas les défauts et inconvénients des compositions de l'art antérieur et apportent une solution aux problèmes des compositions de l'art antérieur.

La température de transition vitreuse des compositions selon l'invention est généralement inférieure aux températures de fonctionnement préférées des électrolyseurs ou des piles à combustible haute température qui sont généralement de 700°C à 900°C, et par exemple de 800°C à 850°C.

Ainsi les températures de transition vitreuse des compositions (A) sont généralement de 580°C à 620°C, tandis que les températures de transition vitreuse des compositions (B) sont généralement de 600°C à 680°C.

Avantageusement, la composition « B » est constituée en pourcentages molaires par :

- 66% de $SiO_2$ ;
- 5,1% de $B_2O_3$;
- 13,4% de $Na_2O$ ;
- 4, 4 % de $K_2O$ ;
- 10,1% de $ZrO_2$ ;
- 1% de $La_2O_3$.

ou bien par :

- 74,9% de $SiO_2$ ;
- 12,9% de $Na_2O$ ;
- 4,2% de $K_2O$
- 7% de $ZrO_2$ ;
- 1% de $Lia_2O_3$.

La composition de verre selon l'invention peut se présenter sous la forme d'une poudre ou bien sous la forme d'un bloc massif.

L'invention concerne en outre un procédé d'assemblage d'au moins deux pièces, dans lequel on réalise les étapes successives suivantes :

- on met en contact les pièces avec une composition de verre selon l'invention, telle qu'elle a été définie plus haut ;
- on chauffe l'ensemble formé par les pièces et la composition de verre à une température suffisante pour faire fondre la composition de verre afin de former un joint entre les pièces ;
- on refroidit l'assemblage formé par les pièces et le joint.

Selon un premier mode de réalisation, l'étape de mise en contact des pièces avec la composition de verre est réalisée en formant une poudre de la composition de verre, en mettant en suspension cette poudre dans un liant organique de façon à obtenir une suspension ou pâte, et en enduisant au moins une surface des pièces à assembler avec la suspension ou pâte obtenue.

Selon un deuxième mode de réalisation, l'étape de mise en contact des pièces avec la composition de verre est réalisée en préparant une pièce en verre ayant la forme du joint à former puis en mettant en place cette pièce entre les surfaces des pièces à assembler.

Avantageusement, ladite pièce en verre peut être préparée en compactant puis en frittant une poudre de la composition de verre dans un moule conforme à la forme de la pièce en verre.

Ou bien, ladite pièce en verre peut être un bloc de verre massif préparé par coulée directe de la composition de verre en fusion dans un moule conforme à la forme de la pièce en verre.

En opérant selon ce deuxième mode de réalisation de la mise en contact en particulier lorsque ladite pièce en verre est un bloc de verre massif, il s'est avéré que la cristallisation à l'intérieur du joint était quasiment inexistante et que le joint conservait ses caractéristiques vitreuses au cours du fonctionnement.

Avantageusement, les pièces à assembler peuvent être en un matériau choisi parmi les métaux ; les alliages métalliques ; les céramiques ; et les matériaux composites comprenant plusieurs parmi les matériaux précités.

Avantageusement, les au moins deux pièces à assembler peuvent être en des matériaux différents.

Avantageusement, les au moins deux pièces à assembler peuvent être des pièces d'un électrolyseur haute température EHT ou d'une pile à combustible haute température SOFC.

L'invention concerne en outre un joint susceptible d'être obtenu par le procédé décrit ci-dessus.

L'invention a également trait à un assemblage susceptible d'être obtenu par le procédé décrit dans ce qui précède.

L'invention concerne enfin un électrolyseur à haute température ou une pile à combustible haute température comprenant un tel assemblage.

L'invention sera mieux comprise à la lecture de la description détaillée qui va suivre donnée à titre illustratif et non limitatif en relation avec les dessins joints, dans lesquels :

## BRÈVE DESCRIPTION DES DESSINS

- La figure 1 est une vue schématique en coupe verticale d'une cellule élémentaire d'un électrolyseur haute température (« EHT ») ;
- La figure 2 est une vue schématique en coupe verticale d'un réacteur élémentaire ou module élémentaire d'un électrolyseur haute température (« EHT ») ;
- La figure 3 est une vue schématique en coupe verticale d'un électrolyseur haute température classique comprenant un empilement de modules élémentaires ;
- La figure 4 est une vue schématique en coupe verticale d'un module élémentaire d'un électrolyseur haute température classique qui montre les joints étanches entre la cellule et les interconnecteurs inférieur et supérieur ;
- La figure 5 est un graphique qui donne la viscosité en fonction de la température de deux compositions de verre (A) selon l'invention désignées « JV36 » (points ●, courbe A) et « JV38 » (points ▲, courbe B), et de deux compositions de verre (B) selon l'invention désignées « VsC33 » (points ◄, courbe C) et « VsC34 » (points ►, courbe D).

Les verres « JV36 », « JV38 », VsC33 » et « VsC34 » ont les compositions suivantes en pourcentages molaires :

    « JV36 » :

- 72,3% de $SiO_2$ ;
- 7,8% de $B_2O_3$ ;
- 14% de $Na_2O$ ;
- 5,9% de $Al_2O_3$.

    « JV38 » :

- 74,3% de $SiO_2$ ;
- 7,8% de $B_2O_3$ ;
- 12% de $Na_2O$ ;
- 5,9% de $Al_2O_3$.

    « VsC33 » :

- 74,9% de $SiO_2$ ;
- 12,9% de $Na_2O$ ;
- 4,2% de $K_2O$ ;
- 7% de $ZrO_2$ ;
- 1% de $La_2O_3$.

    « VsC34 » :

- 66% de $SiO_2$ ;
- 5,1% de $B_2O_3$ ;
- 13,4% de $Na_2O$ ;
- 4,4% de $K_2O$ ;
- 10,1% de $ZrO_2$ ;
- 1% de $Lia_2O_3$.

Sur ce graphique, est également portée la viscosité en fonction de la température d'un verre commercial Schott® 8422 (points ■, courbe E) qui présente la composition suivante en pourcentages molaires :

- 69,8% de $SiO_2$ ;
- 7,8% de $B_2O_3$;
- 12,0% de $Na_2O$ ;
- 4,1% de $K_2O$ ;
- 0,4% de CaO
- 0,2% de BaO.

En ordonnée est portée le Log η (dPa.s) et en abscisse est portée la température T (en °C).

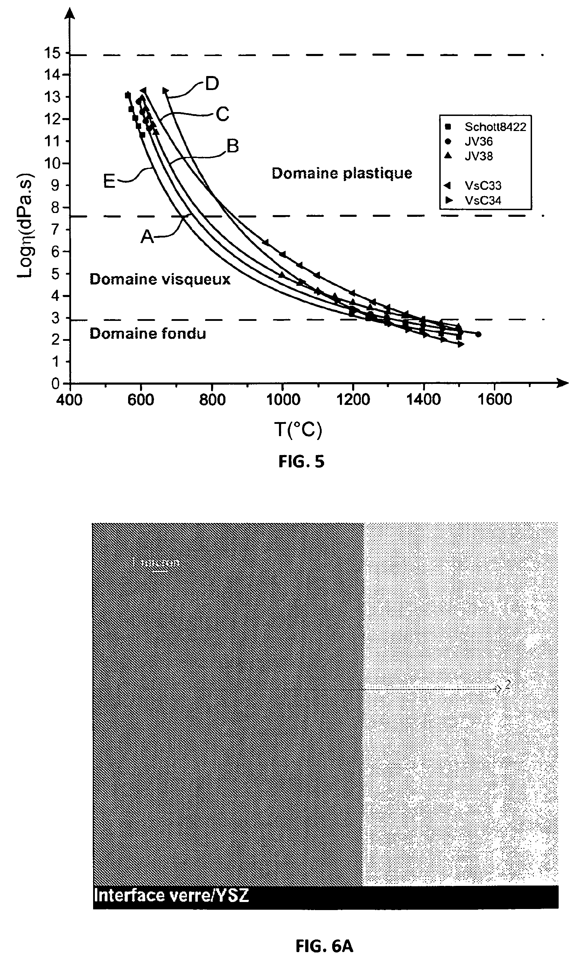

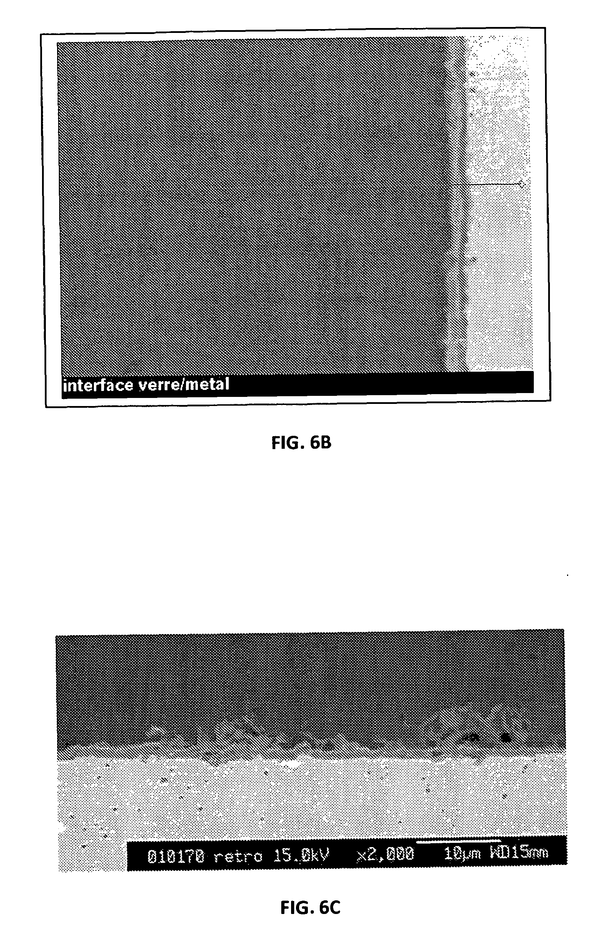

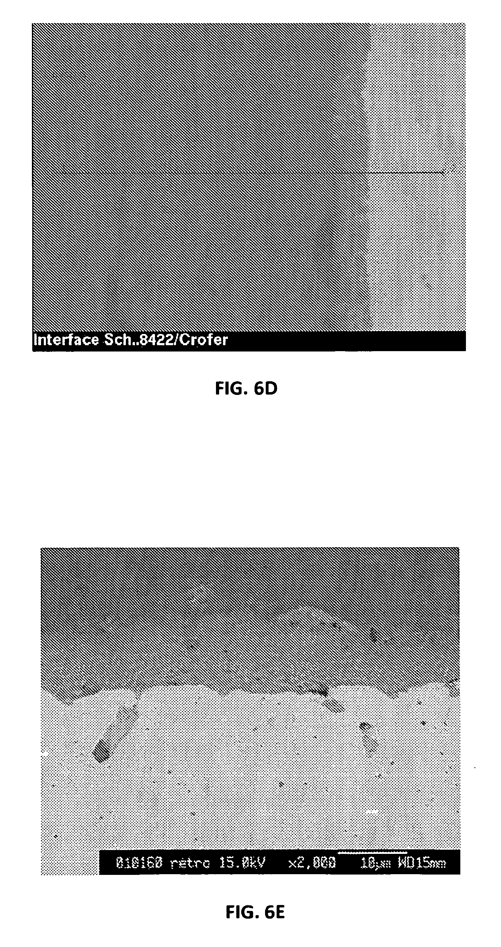

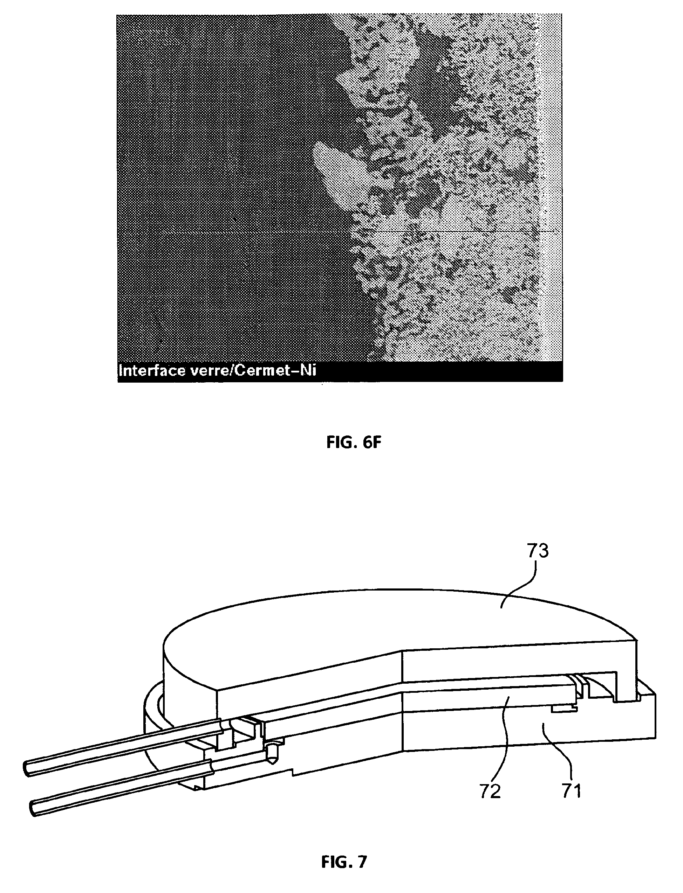

- La figure 6 présente des photographies prises au microscope électronique à balayage (MEB) de l'interface entre d'une part deux compositions de verre (A) selon l'invention désignées « JV36 » et « JV38 » et un verre commercial Schott® 8422 et d'autre part des matériaux d'un électrolyseur, après un test sous atmosphère oxydante à la température de fonctionnement (800°C) .

- La figure 6A est une photographie prise au MEB de l'interface entre le verre « JV36 » selon l'invention et la céramique YSZ après 100 heures de fonctionnement à 800°C. Sur la figure 6A l'échelle en haut à gauche représente 1 μm.

- Les figures 6B et 6C sont des photographies prises au MEB de l'interface entre le verre « JV38 » selon l'invention et du CROFER®, après respectivement 100 heures et 720 heures de fonctionnement à 800°C. Sur la figure 6C l'échelle représente 10 $\mu$m.
- Les figures 6D et 6E sont des photographies prises au MEB de l'interface entre le verre Schott® 8422 et du CROFER®, après respectivement 100 heures et 720 heures de fonctionnement à 800°C. Sur la figure 6D, l'échelle en haut à gauche représente 1 $\mu$m et sur la figure 6E l'échelle représente 10 $\mu$m.
- La figure 6F est une photographie prise au MEB de l'interface entre le verre « JV36 » selon l'invention et un Cermet Ni qui est un électrolyte.

- La figure 7 est une vue schématique du montage de mise en pression pour réaliser des tests d'étanchéité sur les verres selon l'invention et le verre Schott® 8422.

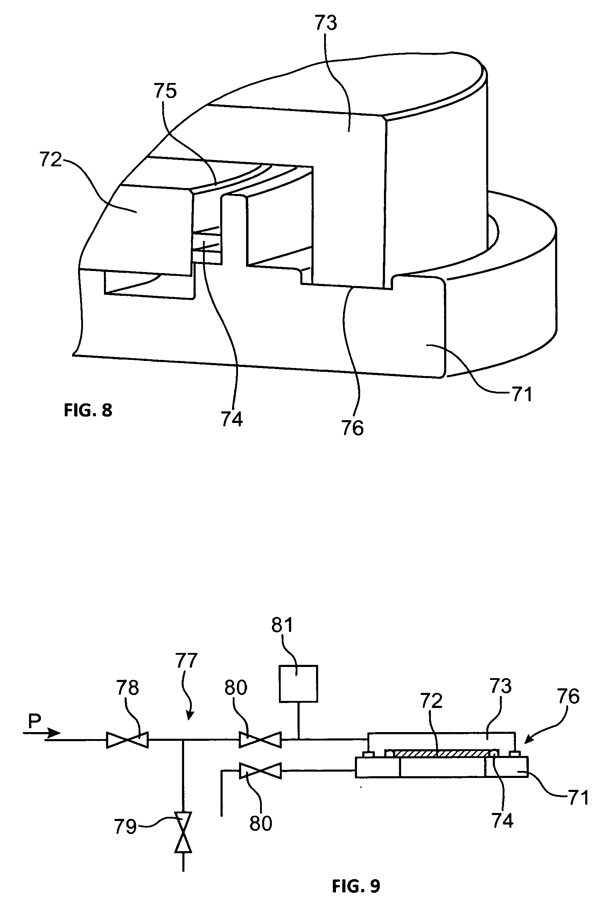

- La figure 8 est une vue schématique qui montre le détail des emplacements des joints dans le montage de mise en pression de la figure 7.
- La figure 9 est une vue schématique en coupe verticale de l'ensemble du montage utilisé pour réaliser des tests d'étanchéité sur les verres selon l'invention et le verre Schott® 8422.

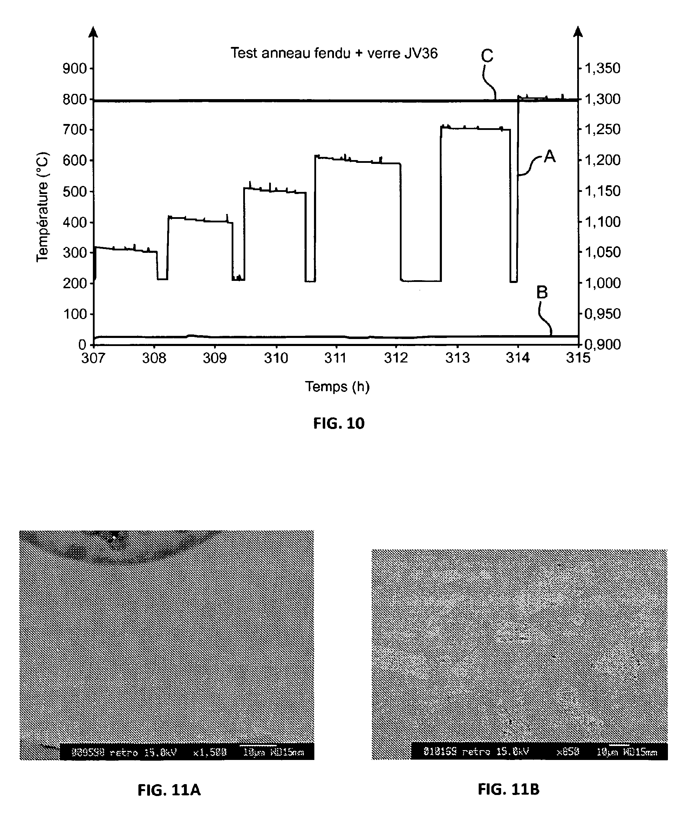

- La figure 10 est un graphique qui représente l'enregistrement des chutes de pression lors d'un test de l'anneau fendu réalisé dans les montages des figures 7, 8 et 9.

En abscisse est porté le temps (heures) et en ordonnée est portée la température (à gauche en °C) et la pression (à droite en bars).

La courbe A représente la pression (en bars), les droites B et C représentent respectivement la température ambiante (en °C) et la température du montage (en °C).

- La figure 11 présente des photographies, prises au microscope électronique à balayage d'un joint préparé avec une barbotine du verre « JV38 » selon l'invention, après un traitement thermique à 800°C pendant une durée de 100 heures (Figure 11A) ou pendant une durée de 1 mois (Figure 11B).

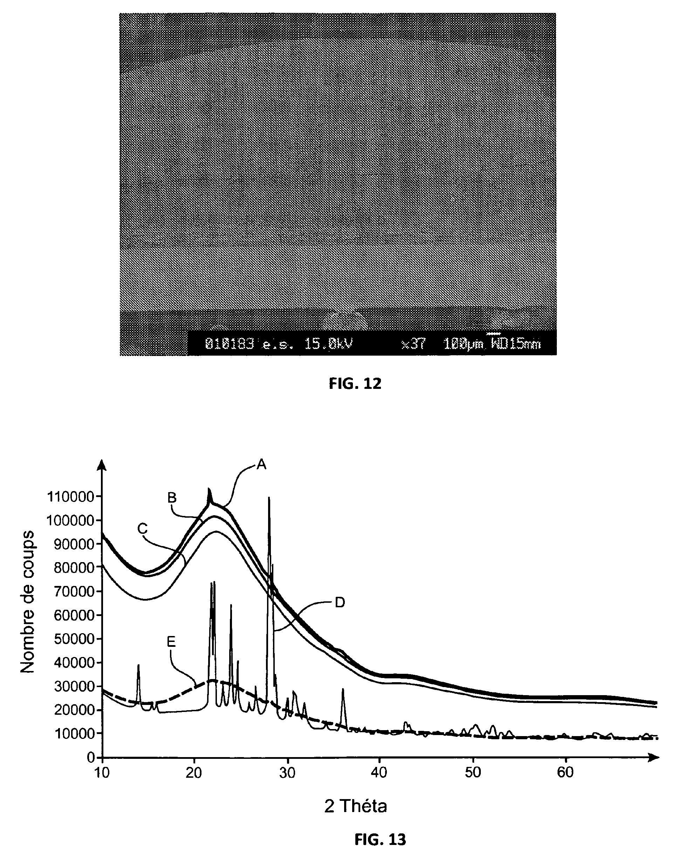

- La figure 12 est une photographie, prise au microscope électronique à balayage d'un joint sous forme massive préparé par coulée directe à partir d'un bloc du verre « JV38 » selon l'invention, après un traitement thermique à 800°C pendant un mois.
- La figure 13 est un graphique qui présente les diagrammes DRX d'un joint préparé à partir d'une barbotine de verre « JV38 » selon l'invention, traité à 800°C pendant 100 heures (courbe A), ou traité à 800°C pendant un mois (courbe D) ; du verre « JV38 » brut initial (courbe B), d'un joint sous forme massive préparé par coulée directe à partir d'un bloc du verre « JV38 » selon l'invention, traité à 800°C pendant 100 heures (courbe C), ou traité à 800°C pendant un mois (courbe E).

En abscisse est porté 2θ et en ordonnée est porté le nombre de coups.

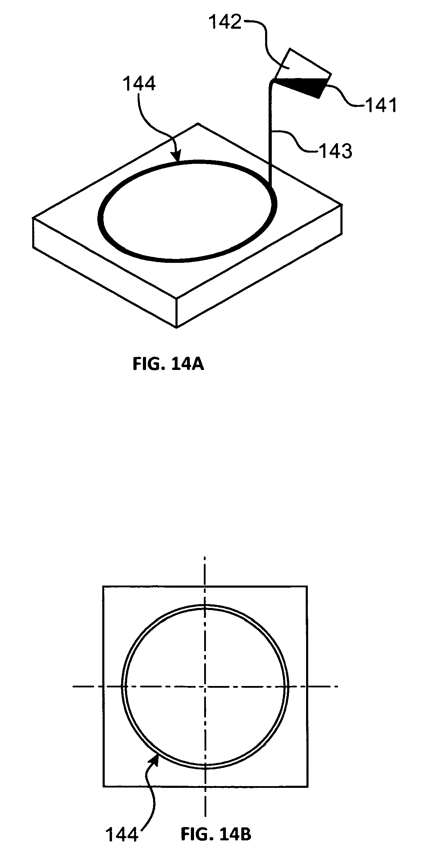

- La figure 14 est un schéma qui montre le protocole de mise en forme d'un joint par coulée directe dans une préforme de gorge de joint.

- La figure 14A illustre l'opération de coulée et la figure 14B est une vue de dessous de la préforme de gorge de joint.

## EXPOSÉ DÉTAILLÉ DE MODES DE RÉALISATION PARTICULIERS

La première étape du procédé selon l'invention consiste, tout d'abord généralement, à préparer, élaborer une composition de verre.

La composition de verre selon l'invention est constituée soit par de la Silice (SiO₂), de l'anhydride borique (B₂O₃), de l'Alumine (Al₂O₃), et du Na₂O (Composition de verre A), soit par de la Silice-(SiO₂), de l'oxyde de Zirconium (ZrO₂), de l'anhydride borique (B₂O₃), de l'oxyde de Lanthane (La₂O₃), du Na₂O, et du K₂O (Composition de verre B). Les proportions molaires et les proportions molaires préférées de chacun des constituants dans ces compositions A et B ont été mentionnées ci-dessus.

La composition de verre selon l'invention est, selon un premier mode de réalisation, une composition pulvérulente qui peut être préparée, en synthétisant, tout d'abord, à partir des différents oxydes purs et/ou de composés constitués par plusieurs de ces oxydes un verre contenant ces oxydes.

Un exemple d'un tel composé, constitué par plusieurs oxydes est la mullite qui est le composé 3Al₂O₃-2SiO₂.

Ces oxydes purs ou composés sont généralement sous la forme de poudres. Ils sont pesés en respectant les proportions voulues dans la composition de verre finale que l'on souhaite obtenir, puis ils sont mélangés et broyés dans tout appareil adéquat, tel qu'un mortier.

Le mélange de poudres broyées est ensuite introduit dans un creuset, généralement en platine, et on fait fondre les différents constituants du mélange de poudres en les soumettant par exemple à un palier de 2 heures sous air à 1500°C ou 1600.°C selon la composition du verre. Après refroidissement, on obtient un verre homogène dont la température de transition vitreuse varie généralement entre 540°C et 680°C selon sa composition.

Le verre obtenu est récupéré, puis broyé dans un mortier ou tout autre dispositif adéquat pour obtenir une poudre de granulométrie adéquate dont les grains ont une dimension, par exemple, un diamètre, par exemple de 5 à 250 $\mu$m, de préférence de 10 à 100 $\mu$m, notamment 63 $\mu$m.

Le verre broyé est ensuite mélangé de manière classique à un cément ou liant organique liquide généralement à la fois visqueux et collant afin d'obtenir une pâte de verre dite « barbotine » permettant un étalement homogène sur les surfaces des substrats à assembler, entre lesquelles doit être réalisé un joint étanche.

Autrement dit, le mélange du verre et du liant a généralement la consistance d'une pâte malléable facile à répartir dans les gorges souvent étroites où doivent se loger les joints.

Le liant comprend généralement un ou plusieurs composés liants tels que le Terpinéol ou le polyvinyl butyral et un ou plusieurs solvants tels que l'éthanol.

La suspension, pâte de la composition de verre décrite précédemment, est étalée, enduite, appliquée, de préférence de façon homogène sur la surface d'au moins l'une des pièces à assembler puis on met en contact les surfaces des deux pièces à assembler. Cette configuration de brasage est appelée « configuration sandwich » car la pâte de la composition de brasure est placée directement entre les surfaces des pièces à assembler.

La quantité de pâte, suspension de composition de brasure à mettre en oeuvre dans cette configuration est généralement de l'ordre de 0,1 à 0,4 cm$^3$ de pâte par cm$^2$.

Ou bien, on rapproche les surfaces des pièces à assembler de façon à laisser un intervalle généralement de 1 à 500 $\mu$m qui sera comblé par effet de capillarité par la composition de brasure, cette dernière étant disposée à proximité de l'intervalle à combler dans un espace ou réservoir ménagé à cet effet, ledit réservoir pouvant avoir des dimensions millimétriques conformément aux connaissances de l'homme du métier en ce domaine.

Cette configuration de brasage est appelée « configuration capillaire ». Avec les compositions de brasure selon l'invention, il est possible de réaliser un tel brasage capillaire, à savoir une infiltration de la brasure dans le joint de brasage, sans disposer directement la composition de brasure entre les pièces à assembler comme dans le cas de la « configuration sandwich ».

La quantité de pâte, suspension de composition de brasure à mettre en oeuvre dans cette configuration capillaire est généralement du même ordre que celle indiquée plus haut.

Ou bien, la poudre de verre obtenue comme décrit ci-dessus peut être compactée puis frittée dans un moule ou préforme par exemple en graphite, de forme adaptée correspondant à la forme du joint que l'on souhaite obtenir. Ce moule ou cette préforme peut par exemple comporter une rainure ou gorge dont la forme est celle de la gorge dans laquelle le joint devra venir s'adapter. On obtient ainsi une pièce en verre frittée qui est retiré du moule et qui est ensuite mise en place entre les pièces à assembler.

La composition de verre selon l'invention peut se présenter sous la forme non plus d'une poudre, mais d'un bloc massif.

Précisons qu'une poudre est généralement constituée de particules discrètes dont la dimension, par exemple le diamètre moyen peut aller de 5 $\mu$m à 250 $\mu$m tandis qu'un bloc massif a généralement une taille définie par sa plus grande dimension de 1 à 50 cm.

On peut faire fondre ce bloc massif et couler le verre en fusion directement dans un moule ou préforme par exemple en graphite, de forme adaptée correspondant à la forme du joint que l'on souhaite obtenir. Ce moule ou cette préforme peut par exemple comporter une rainure ou gorge dont la forme est celle de la gorge dans laquelle le joint devra venir s'adapter. On obtient ainsi une pièce de verre sous la forme d'un bloc de verre massif qui est retiré du moule et qui est ensuite mis en place entre les pièces à assembler.

La préparation, mise en forme d'un joint sous forme massive, à savoir sous la forme d'un bloc de verre, brut de coulée, est décrite sur la Figure 14.

Un verre en fusion (141) ayant une composition selon l'invention et contenu dans un creuset (142), est coulé (143) directement dans une préforme de gorge de joint (144) en graphite (Figure 14A).

La figure 14B est une vue de dessous de la préforme montrée en perspective sur la figure 14A. La gorge de joint présentée est circulaire, mais d'autres formes pourraient être envisagées.

Les modes de réalisation dans lesquels on met en place entre les pièces à assembler une pièce en verre préparée à partir de verre compacté fritté ou bien une pièce en verre massif brut de coulée sont particulièrement avantageux car ils permettent de limiter le phénomène de cristallisation favorisé par l'emploi de joints préparés à partir de poudres et qui se produit lors du maintien de ce joint à des températures élevées, par exemple de 700°C à 900°C, et donc de préserver la nature essentiellement vitreuse du joint à ces températures élevées.

La deuxième étape du procédé selon l'invention consiste généralement à réaliser l'assemblage proprement dit.

Préalablement à l'assemblage, et généralement préalablement à l'enduction des surfaces à assembler par une pâte de la composition de verre, ou bien préalablement à la mise en place d'une pièce en verre compacté fritté ou en verre massif les deux (ou plus) surfaces des pièces à assembler sont généralement dégraissées dans un solvant organique par exemple du type cétone, ester, éther, alcool, ou un mélange de ceux-ci; puis séchées.

Les pièces à assembler sont en général au nombre de deux, mais on peut aussi assembler simultanément un plus grand nombre de pièces pouvant aller jusqu'à 100.

Selon l'invention, il est possible d'assembler, avec à chaque fois d'excellents résultats des pièces de géométrie, forme complexe et/ou de grande taille.

Les deux pièces ou plus à assembler peuvent être en un même matériau, ou bien elles peuvent être en des matériaux différents. C'est là un des avantages de la composition selon l'invention que de permettre l'assemblage de matériaux très différents, notamment de matériaux dont les coefficients de dilatation thermiques sont très différents.

Les pièces à assembler peuvent être en un matériau choisi parmi les métaux et alliages tels que les aciers, et les alliages de Nickel; les Cermets ; les céramiques ; et les matériaux composites comprenant plusieurs des matériaux précités.

L'application privilégiée des compositions de verre selon l'invention est l'assemblage des divers éléments constitutifs d'une « EHT » ou d'une « SOFC » et les matériaux qui peuvent être assemblés par le procédé selon l'invention en mettant en oeuvre la composition selon l'invention seront de préférence choisis parmi les matériaux qui constituent les divers éléments de ces appareils.

Ainsi, les matériaux préférés pour la cathode « EHT » (anode en mode « SOFC ») et l'anode « EHT » (cathode en mode « SOFC ») sont, respectivement, le cermet Oxyde de Nickel-Oxyde de Cérium Gadolinié (NiO-CGO) et la Manganite de Lanthane strontiée ($La_{1-x}Sr_xMn_yO_{3-\delta}$ ou LSM).

Il s'agit des matériaux les plus couramment utilisés aujourd'hui industriellement en mode « SOFC », mais de nombreux autres matériaux et combinaisons peuvent être envisagés, tels que le cermet NiO-YSZ, les nickelates ($La_4Ni_3O_{10}$, $La/Nd_2NiO_4$), les chromo-manganites (LaCeSrCrMnO), les ferrites ($La_{1-X}Sr_XFe_YO_{3-\delta}$), les cobaltites (($La_{1-X}Sr_XCo_YO_{3-\delta}$) ou les titanates ($La_4Sr_{n-4}Ti_nO_{3n+2-\delta}$).

Les pièces prêtes à être assemblées sont alors disposées dans un dispositif de chauffage tel qu'un four ou soumises à un chauffage par tout autre moyen adéquat.

L'assemblage peut être réalisé sous une atmosphère d'air.

Les pièces à assembler sont soumises par exemple dans le four à un cycle thermique de chauffage, généralement sous une atmosphère d'air.

Ainsi l'ensemble formé par les pièces et la composition de verre (pâte, pièce compactée frittée ou pièce massive) peut-il être amené à la température de brasage (palier de brasage) en observant une montée en température de préférence « lente », avec une ou plusieurs rampes de température depuis la température ambiante.

Cette montée en température peut se faire par exemple avec une rampe de température à raison de 0,5°C par minute.

Le palier de brasage est généralement effectué à une température correspondant à un état de ramollissement du verre où sa viscosité est de l'ordre de $10^5$ dPa.s, mais cette température est, de préférence, une température au moins supérieure de 300°C à la température de transition vitreuse.

Cette température dite de « brasage » est une température qui est une température suffisante permettant la formation du joint avec les interfaces c'est-à-dire le mouillage de la composition de verre fondu sur les surfaces des matériaux constituant les pièces à assembler.

Selon les compositions, la température de brasage variera donc, par exemple, de 850°C à 1000°C.

Une telle température de fusion des compositions permet, selon un autre avantage du procédé de l'invention, une utilisation de l'assemblage, notamment, sous air par exemple jusqu'à 800°C et même jusqu'à 900°C.

La durée du brasage, c'est-à-dire le cycle thermique de réalisation de l'assemblage est généralement de 1 à 10 heures.

En fin de cycle de brasage, suite au palier de brasage, on refroidit l'assemblage jusqu'à la température d'utilisation c'est-à-dire 700°C à 900°C, à raison par exemple de 0,5°C par minute.

Pendant le refroidissement, la composition de verre se solidifie et un joint solide se forme.

Les assemblages de pièces comportant des joints préparés par le procédé selon l'invention permettent de réaliser des structures, appareils, composants de formes complexes ayant des températures d'utilisation élevées pouvant aller généralement jusqu'à 900°C avec une grande précision.

En d'autres termes, le procédé selon l'invention peut notamment s'appliquer à la fabrication de tout dispositif, appareil, structure, composant, nécessitant un assemblage entre au moins deux substrats, pièces en garantissant à la fois une bonne tenue mécanique et une étanchéité satisfaisante au niveau de l'assemblage.

Ces dispositifs, appareils, structures, composants peuvent répondre à des besoins dans différents domaines mais le domaine préféré auquel s'applique l'invention est celui des électrolyseurs et des piles à combustible haute température.

L'invention va maintenant être décrite au moyen des exemples suivants donnés bien entendu à titre illustratif et non limitatif.

## EXEMPLES :

Dans les exemples 1 à 3 qui suivent, on détermine les caractéristiques de deux compositions de verre (A) selon l'invention appartenant à la famille « $SiO_2$-$B_2O_3$-$Al_2O;$-$Na_2O$ », dénommées « JV36 » et « JV38 » qui présentent respectivement les compositions en pourcentages molaires suivantes:

« JV36 » :

-   72,3% de $SiO_2$ ;
-   7,8% de $B_2O_3$ ;

- 14% de $Na_2O$ ;
- 5, 9% de $Al_2O_3$.

« JV38 » :

- 74,3% de $SiO_2$ ;
- 7,8% de $B_2O_3$ ;
- 12% de $Na_2O$ ;
- 5,9% de $Al_2O_3$ ;

et éventuellement de deux compositions de verre (B) selon l'invention appartenant à la famille « $SiO_2$-$ZrO_2$-$B_2O_3$-$La_2O_3$-$Na_2O$-$K_2O$ » dénommées « VsC33 » et « VsC34 » qui présentent respectivement les compositions en pourcentages molaires suivantes :

« VsC33 » :

- 74,9% de $SiO_2$ ;
- 12,9% de $Na_2O$ ;
- 4 , 2 % de $K_2O$ ;
- 7% de $ZrO_2$ ;
- 1% de $La_2O_3$.

« VsC34 » :

- 66% de $SiO_2$ ;
- 5,1% de $B_2O_3$;
- 13,4% de $Na_2O$ ;
- 4,4% de $K_2O$;
- 10,1% de $ZrO_2$ ;
- 1% de $Lia_2O_3$.

Et on compare ces caractéristiques à celles du verre commercial Schott[®] 8422 qui présente la composition suivante en pourcentages molaires :

- 69,8% de $SiO_2$ ;
- 7,8% de $B_2O_3$ ;
- 12,0% de $Na_2O$ ;
- 4,1% de $K_2O$ ;
- 0,4% de CaO
- 0,2% de BaO.

Exemple 1 :

Dans cet exemple, on réalise des mesures de viscosité pour les deux verres (A) selon l'invention décrits ci-dessus, dénommés « JV36 » et « JV38 » et pour les deux verres (B) selon l'invention décrits ci-dessous, dénommés « VsC33 » et « VsC34 » et pour le verre comparatif Schott[®] 8422.

Ces mesures ont été effectuées dans deux domaines de températures (550°C-700°C) et (1000°C-1500°C) qui ont été corrélés par une loi de type VFT

$$( \log\eta = A + \frac{B}{T - T_0} ) \,.$$

On note sur la figure 5 sur laquelle ont été représentés les domaines plastiques, visqueux et fondus des verres, que dans la plage de 700°C à 850°C qui constitue une plage de fonctionnement couramment utilisée dans les appareils tels que les électrolyseurs haute température ou les piles à combustible haute température, les verres « JV36 » et « JV38 » selon l'invention ont un comportement viscoplastique conférant au joint une combinaison optimale de souplesse et de rigidité.

C'est aussi le cas des verres VsC33 et VsC34.

En particulier, à 800°C, la viscosité des verres « JV36 » et « JV38 » selon l'invention se situe entre $10^7$ et $10^8$ dPa.s.

Exemple 2 :

Dans cet exemple, on étudie les interactions des compositions de verre selon l'invention et du verre Schott[®] 8422 avec divers matériaux constituant un électrolyseur à la température de fonctionnement, à savoir 800°C, et pendant une durée de 100 heures sous atmosphère oxydante.

Ces essais sont conduits au laboratoire avec des échantillons de matériaux représentatifs de l'électrolyseur, sur lesquels on dispose une petite quantité de pâte de verre mise en oeuvre de la même manière que pour les essais sur les prototypes d'électrolyseurs. Les échantillons verre/métal et verre/céramique sont traités sous air dans un four à moufle.

On observe ensuite l'interface avec un microscope électronique à balayage (MEB).

- Étude de l'Interaction du verre « JV36 » avec la céramique « YSZ » pendant 100 heures à 800°C sous une atmosphère oxydante.

La Figure 6A est une photographie prise au MEB de l'interface entre le verre « JV36 » selon l'invention et la céramique YSZ après 100 heures de fonctionnement à 800°C.

On constate qu'aucune phase intermédiaire n'est observée à l'interface.

- Étude de l'Interaction du verre « JV36 » avec le CROFER[®] pendant respectivement 100 heures et 720 heures à 800°C, sous une atmosphère oxydante.

Les Figures 6B et 6C sont des photographies prises au MEB de l'interface entre le verre « JV38 » selon l'invention et du CROFER[®], après respectivement 100 heures et 720 heures de fonctionnement à 800°C.

On constate sur les figures 6B et 6C que les épaisseurs d'oxyde de chrome formées à l'interface sont respectivement de 0,75 $\mu$m (pour 100 heures) et de 2 $\mu$m (pour 720 heures).

- Étude de l'Interaction du verre Schott® 8422 avec le CROFER® pendant respectivement 100 heures et 720 heures à 800°C, sous une atmosphère oxydante.

Les Figures 6D et 6E sont des photographies prises au MEB de l'interface entre le verre Schott® 8422 et du CROFER®, après respectivement 100 heures et 720 heures de fonctionnement à 800°C.

On constate sur ces figures que les épaisseurs d'oxyde de chrome formées à l'interface Schott® 8422/ CROFER® qui sont respectivement de 4 $\mu$m (pour 100 heures) et de 15 $\mu$m (pour 720 heures) sont nettement plus importantes que celles à l'interface verre « JV38 » selon l'invention / CROFER®.

La Figure 6F est une photographie prise au MEB de l'interface entre le verre « JV36 » selon l'invention et un Cermet Ni qui est un électrolyte.

Cette photographie montre que le verre selon l'invention pénètre dans toutes les porosités de ce Cermet Ni sans aucun endommagement.

Cet exemple démontre que les interactions entre les verres selon l'invention et divers matériaux d'électrolyseurs haute température sont bien moindres que les interactions entre le verre Schott® et ces mêmes matériaux.

Exemple 3 :

Dans cet exemple, on réalise des tests d'étanchéité par mesure de chute de pression sur le verre Schott® 8422 et sur le verre « JV36 » selon l'invention.

Le montage de mise en pression utilisé pour ces mesures est schématisé sur la Figure 7.

Le montage est constitué essentiellement de 3 parties :

- une sole métallique (71) par exemple en acier ;
- un disque ou sole céramique (72) simulant la cellule ;
- une cloche métallique (73).

Comme on peut le voir sur la figure 8, le joint de test est le joint interne (74) , déposé dans la gorge formée par une partie de la sole métallique et le flan (75) du disque céramique. Le joint dit de servitude (76) permet d'étancher la partie supérieure du montage et la mise en pression pour le test d'étanchéité du joint interne (74).

Le montage de la figure 7 est disposé dans un circuit de mise sous pression alimenté par un circuit d'argon (77) comprenant des vannes de réglage (78), de purge (79), et d'isolement (80), et un capteur (81) (voir figure 9).

Le mode opératoire du test d'étanchéité est le suivant :

- Mise en place des joints : les joints, sous forme de pâte, sont mis en place dans les gorges à l'aide d'une seringue sur une hauteur d'environ 2,5 mm (soit environ 0,3 cm$^3$ de pâte par cm$^2$ pour le joint interne, et environ 0,2 cm$^3$ de pâte par cm$^2$ pour le joint de servitude) ;
- Conditionnement des joints : un traitement thermique préliminaire est appliqué pour former les joints (0,5°C par minute jusqu'à la température de formation $T_{formation}$ (entre 850°C et 1000°C), pendant 1 à 10 heures puis redescente à 0,5°C par minute) ;
- Mise en place du montage : mise en place de la cloche et des masses sur la maquette dont le poids varie en fonction du niveau de surpression à tester (typiquement entre 60 kg et 150 kg pour une mise en pression de 0,2 bar à 3 bar) ;
- Mise en température du montage : montée à raison de 0,5°C par minute jusqu'à la température de test $T_{test}$ (750°C à 1000°C) ;
- Mise en pression du montage en montant la pression par paliers de 50 mbar jusqu'à $P_{test}$, isolement du circuit et mesure de la chute de pression à l'aide du capteur de pression. Maintien de la pression à $P_{test}$ tout d'abord pendant une heure puis si l'étanchéité est bonne pendant environ une semaine et enregistrement de la chute de pression (Figure 10) ;
- Refroidissement jusqu'à la température ambiante à raison de 0,5°C par minute.

Sur la Figure 10 qui concerne le test de l'anneau fendu réalisé avec le verre « JV36 », le test d'étanchéité est réalisé à la température nominale (T montage) de 800°C : le circuit est mis en pression par paliers de 50 mbar (50 mbar, 100 mbar, 150 mbar, 200 mbar, 250 mbar et 300 mbar), avec remise à la $P_{atm}$ entre chaque consigne. Le circuit est maintenu à la pression de chaque palier pendant 1 heure pendant laquelle la chute de pression est mesurée. Pour le dernier palier (300 mbar pression $P_{test}$) et comme on l'a précisé plus haut, on commence d'abord par maintenir le circuit pendant une heure à cette pression, puis si l'étanchéité est bonne on le maintient à cette pression ($P_{test}$) pendant une semaine pendant laquelle la chute de pression est mesurée.

Des taux de fuite de $10^{-5}$ Pa.m$^3$.s$^{-1}$ à 800°C sous 300 mbar de pression et pendant 166 heures ont été mesurés avec le joint en verre « JV36 » selon l'invention.

Avec le joint en verre Schott® 8422, la meilleure étanchéité mesurée à la même température n'est que de $2.10^{-3}$ Pa.m$^3$.s$^{-1}$, sous 150 mbar.

Exemple 4 :

Dans cet exemple, on compare les propriétés de joints de verre mis en forme de manière classique à partir d'une pâte de verre du verre « JV 38 » ou de joints massifs mis en forme par coulée directe du même verre « JV38 » selon le protocole décrit sur la figure 14A. Les essais sont conduits au laboratoire de la même manière que dans l'exemple 2.

On utilise le mode de mise en forme « classique » du joint de verre qui consiste en la préparation d'une pâte de verre dite « barbotine » composée du verre broyé à une granulométrie variant de 0 à 63 $\mu$m et d'un mélange de différents liants organiques.

Les proportions massiques utilisées sont de 12% de Terpinéol, 6% de Poly Vinyl Butyral, 12% d'Ethanol et 70% de poudre de verre.

Avec cette pâte, on a réalisé l'assemblage de la manière suivante : la pâte de verre est déposée sur les substrats suivants : l'acier inoxydable Crofer®, l'alliage Haynes® 230, les céramiques de type YSZ ou Macor®, et l'ensemble est ensuite chauffé jusqu'à température (800°C ou 900°C) avec une rampe de montée de 0,5°C par minute puis refroidit lentement à 0,5°C par minute.

Lors de tests d'une centaine d'heures à 800°C, le joint préparé à partir de la préparation « pâte », barbotine de verre « JV38 » cristallise peu (Figure 11A), en revanche après un mois de maintien à 800°C, le joint développe une phase cristallisée d'albite ($Na(Si_3Al)O_8$) à plus de 50% du volume que l'on identifie clairement sur la Figure 11B. Les propriétés du joint sont alors complètement modifiées.

Pour pallier ce problème, le joint est mis en forme sous forme massive selon le protocole décrit sur la Figure 14A. Le joint est donc constitué par un bloc de verre « JV38 », brut de coulée.

Après traitement de ce joint massif à 800°C pendant 1 mois, la cristallisation est quasiment inexistante et le joint garde ses caractéristiques vitreuses au cours du fonctionnement.

Sur la Figure 12, on constate au contraire de la Figure 11B l'absence totale de cristaux dans le joint.

L'examen des diagrammes de diffraction des rayons X de la Figure 13 confirme les observations réalisées au microscope électronique à balayage.

On constate en particulier sur la Figure 13 que le diagramme DRX du joint préparé à partir d'une barbotine de verre, traité un mois à 800°C présente les pics caractéristiques de la cristallisation d'une phase $NaSi_3AlO_8$. Les diagrammes du verre brut initial et des joints constitués par un bloc de verre massif préparé par coulée directe, traités 100 heures ou 1 mois à 800°C ne présentent pas de tels pics, ce qui montre que les joints conservent leurs caractéristiques vitreuses initiales et ne cristallisent pas, même après un traitement prolongé à une température élevée.

## RÉFÉRENCES

[1] Zheng R. et al., Journal of Power Sources, 128 (2004), 165-172.

[2] Eichler K. et al., Journal of the European Ceramic Society, 19 (1999), 1101-1104.

[3] Loehman R. et al., Brow R. "Engineered Glass Composites for Sealing Solid Oxide Fuel Cells" SECA Core Technology Program Review, May 11-13, 2004 Boston, USA.

[4] US-A-4,921,738.

[5] WO-A1-96/05626.

[6] US-B1-6,430,966.

[7] Yang Z. et al., Solid State Ionics 160 (2003), 213-225.

[8] Lahl N et al., Journal of Material Sciences, 35 (2000), 3089-3096.

[9] WO-A1-99/54131.

[10] WO-A1-2006/069753.

[11] US-B2-6,828,263.

[12] US-A-5,196,277.

## Revendications

1. Composition de verre **caractérisée en ce qu'**elle est choisie dans le groupe constitué par une composition de verre (A) constituée en pourcentages molaires par :

   - 72,3% de $SiO_2$ ;
   - 7,8% de $B_2O_3$ ;
   - 14% de $Na_2O$ ;
   - 5,9% de $Al_2O_3$.

   ou bien par :

   - 74,3% de $SiO_2$ ;
   - 7,8% de $B_2O_3$ ;
   - 12% de $Na_2O$ ;
   - 5,9% de $Al_2O_3$;

   et une composition de verre (B) constituée en pourcentages molaires par :

   - 63 à 76% de $SiO_2$ ;
   - 5 à 12% de $ZrO_2$ ;
   - 0 à 12% de $B_2O_3$ ;
   - 0 à 2% de $La_2O_3$ ;
   - 11 à 14% de $Na_2O$ ;
   - 3 à 5% de $K_2O$.

2. Composition de verre selon la revendication 1 qui n'est constituée à l'issue de son élaboration et avant tout traitement thermique que d'une phase vitreuse.

3. Composition de verre selon la revendication 1 comprenant moins de 50% en poids de phase cristalline et de préférence 0% en poids de phase cristalline, après son maintien à une température de 600°C à 1000°C, notamment de 700 à 900°C pendant une durée supérieure à 1 heure.

4. Composition selon l'une quelconque des revendications 1 et 3 dans laquelle la composition est une composition viscoplastique et présente une viscosité dans la plage de $10^7$ à $10^8$ dPa.s dans la plage de 700°C à 900°C.

5. Composition selon l'une quelconque des revendications 1 à 4 dans laquelle la température de transition vitreuse de la composition (A) est de 580°C à 620°C, et la température de transition vitreuse de la composition (B) est de 600°C à 680°C.

6. Composition selon l'une quelconque des revendications 1 à 5 dans laquelle la composition « B » est constituée en pourcentages molaires par :

- 66% de $SiO_2$ ;
- 5,1% de $B_2O_3$ ;
- 13,4% de $Na_2O$ ;
- 4,4% de $K_2O$ ;
- 10,1% de $ZrO_2$ ;
- 1% de $La_2O_3$.

ou bien par :

- 74,9% de $SiO_2$ ;
- 12,9% de $Na_2O$ ;
- 4,2% de $K_2O$
- 7% de $ZrO_2$ ;
- 1% de $La_2O_3$.

7. Composition de verre selon l'une quelconque des revendications 1 à 6 qui se présente sous la forme d'une poudre ou bien d'un bloc massif.

8. Procédé d'assemblage d'au moins deux pièces, dans lequel on réalise les étapes successives suivantes :

- on met en contact les pièces avec une composition de verre selon l'une quelconque des revendications 1 à 7 ;
- on chauffe l'ensemble formé par les pièces et la composition de verre à une température suffisante pour faire fondre la composition de verre afin de former un joint entre les pièces ;
- on refroidit l'assemblage formé par les pièces et le joint.

9. Procédé selon la revendication 8 dans lequel l'étape de mise en contact des pièces avec la composition de verre est réalisée en formant une poudre de la composition de verre, en mettant en suspension cette poudre dans un liant organique de façon à obtenir une suspension ou pâte, et en enduisant au moins une surface des pièces à assembler avec la suspension ou pâte obtenue.

10. Procédé selon la revendication 8 dans lequel l'étape de mise en contact des pièces avec la composition de verre est réalisée en préparant une pièce en verre ayant la forme du joint à former puis en mettant en place cette pièce entre les surfaces des pièces à assembler.

11. Procédé selon la revendication 10 dans lequel ladite pièce en verre est préparée en compactant puis en frittant une poudre de la composition de verre dans un moule conforme à la forme de la pièce en verre.

12. Procédé selon la revendication 10 dans lequel ladite pièce en verre est un bloc de verre massif préparé par coulée directe de la composition de verre en fusion dans un moule conforme à la forme de la pièce en verre.

13. Procédé selon l'une quelconque des revendications 8 à 12 dans lequel les pièces à assembler sont en un matériau choisi parmi les métaux ; les alliages métalliques ; les céramiques ; et les matériaux composites comprenant plusieurs parmi les matériaux précités.

14. Procédé selon l'une quelconque des revendications 8 à 13 dans lequel les au moins deux pièces à assembler sont en des matériaux différents.

15. Procédé selon l'une quelconque des revendications 8 à 14 dans lequel les au moins deux pièces à assembler sont des pièces d'un électrolyseur haute température EHT ou d'une pile à combustible haute température SOFC.

16. Joint susceptible d'être obtenu par le procédé selon l'une quelconque des revendications 8 à 15.

17. Assemblage susceptible d'être obtenu par le procédé selon l'une quelconque des revendications 8 à 15.

18. Électrolyseur haute température ou pile à combustible haute température comprenant un assemblage selon la revendication 17.

**Claims**

1. A glass composition **characterized in that** it is selected from the group consisting of a glass composition (A) consisting of, in molar percentages:

- 72.3% of $SiO_2$;
- 7.8% of $B_2O_3$;
- 14% of $Na_2O$;
- 5.9% of $Al_2O_3$;

or else by:

- 74.3% of $SiO_2$;
- 7.8% of $B_2O_3$;
- 12% of $Na_2O$;
- 5.9% of $Al_2O_3$;

and a glass composition (B) consisting of, in molar percentages:

- 63 to 76% of $SiO_2$;
- 5 to 12% of $ZrO_2$;
- 0 to 12% of $B_2O_3$;
- 0 to 2% of $La_2O_3$;
- 11 to 14% of $Na_2O$;
- 3 to 5% of $K_2O$.

2. The glass composition according to claim 1 which at the end of its elaboration and before any heat treatment only consists of a glassy phase.

3. The glass composition according to claim 1, comprising less than 50% by weight of crystalline phase and preferably 0% by weight of crystalline phase, after its maintaining at a temperature from 600°C to 1,000°C, notably from 700 to 900°C for a duration of more than 1 hour.

4. The composition according to any one of claims 1 and 3, wherein the composition is a visco-plastic composition and has a viscosity in the range from $10^7$ to $10^8$ dPa.s in the range from 700°C to 900°C.

5. The composition according to any one of claims 1 to 4, wherein the glass transition temperature of composition (A) is from 580°C to 620°C, and the glass transition temperature of composition (B) is from 600°C to 680°C.

6. The composition according to any one of claims 1 to 5 wherein the composition « B » consists of, in molar percentages:

- 66% of $SiO_2$;
- 5.1% of $B_2O_3$;
- 13.4% of $Na_2O$;
- 4.4% of $K_2O$;
- 10.1% of $ZrO_2$;
- 1% of $La_2O_3$

or else by:

- 74.9% of $SiO_2$;
- 12.9% of $Na_2O$;
- 4.2% of $K_2O$
- 7% of $ZrO_2$;
- 1% of $La_2O_3$.

7. The glass composition according to any one of claims 1 to 6, which appears in the form of a powder or else of a solid block.

8. A method for assembling at least two parts, wherein the following successive steps are carried out:

- the parts are put into contact with a glass composition according to any one of claims 1 to 7;
- the assembly formed by the parts and the glass composition is heated to a temperature that is sufficient to melt the glass composition so as to form a gasket between the parts;
- the assembly formed by the parts and the gasket is cooled.

9. The method according to claim 8, wherein the step of putting the parts into contact with the glass composition is carried out by forming a powder of the glass composition, by suspending this powder in an organic binder so as to obtain a suspension or slurry, paste, and by coating at least one surface of the parts to be assembled with the obtained suspension or slurry, paste.

10. The method according to claim 8, wherein the step of putting the parts into contact with the glass composition is achieved by preparing a glass part having the shape of the gasket to be formed and then by placing this part between the surfaces of the parts to be assembled.

11. The method according to claim 10, wherein said glass part is prepared by compacting and then sintering a powder of the glass composition in a mold compliant with the shape of the glass part.

12. The method according to claim 10, wherein said glass part is a solid glass block prepared by direct casting of the molten glass composition into a mold compliant with the shape of the glass part.

13. The method according to any one of claims 8 to 12, wherein the parts to be assembled are made of a material selected from metals; metal alloys; ceramics; and composite materials comprising several of the aforementioned materials.

14. The method according to any one of claims 8 to 13 wherein said at least two parts to be assembled are made of different materials.

15. The method according to any one of claims 8 to 14, wherein said at least two parts to be assembled are parts of a high temperature electrolyzer HTE or of a high temperature fuel cell SOFC.

16. A gasket obtainable by the method according to any one of claims 8 to 15.

17. An assembly obtainable by the method according to any one of claims 8 to 15.

18. A high temperature electrolyzer or high temperature fuel cell comprising an assembly according to claim 17.

**Patentansprüche**

1. Glaszusammensetzung, **dadurch gekennzeichnet, dass** sie ausgewählt wird aus der Gruppe, die gebildet wird durch eine Glaszusammensetzung (A) aus, in Molprozenten :

   - 72,3 % $SiO_2$ ;
   - 7,8 % $B_2O_3$ ;
   - 14% $Na_2O$;
   - 5,9% $Al_2O_3$ ;

   oder:

   - 74,3% $SiO_2$ ;
   - 7,8 % $B_2O_3$ ;
   - 12% $Na_2O$;
   - 5,9% $Al_2O_3$ ;

   und durch eine Glaszusammensetzung (B) aus, in Molprozenten :

   - 63 bis 76 % $SiO_2$ ;
   - 5 bis 12% $ZrO_2$;
   - 0 bis 12 % $B_2O_3$ ;
   - 0 bis 2 % $La_2O_3$ ;
   - 11 bis 14 % $Na_2O$ ;
   - 3 bis 5 % $K_2O$.

2. Glaszusammensetzung nach Anspruch 1, die nach ihrer Herstellung und vor jeglicher thermischen Behandlung nur durch eine Glasphase gebildet wird.

3. Glaszusammensetzung nach Anspruch 1, die - nach Aufrechterhaltung ihrer Temperatur in einem Bereich von 600 °C bis 1000 °C, insbesondere von 700 °C bis 900 °C während einer Dauer von mehr als 1 Stunde -, als Massenanteil weniger als 50 % und vorzugsweise 0 % kristalline Phase enthält.

4. Zusammensetzung nach einem der Ansprüche 1 und 3, bei der die Zusammensetzung eine viskoplastische Zusammensetzung ist und in dem Bereich von 700 °C bis 900 °C eine Viskosität in dem Bereich von $10^7$ bis $10^8$ dPa.s hat.

5. Zusammensetzung nach einem der Ansprüche 1 und 4, bei der die Glasübergangstemperatur der Zusammensetzung (A) 580 °C bis 620 °C und die die Glasübergangstemperatur der Zusammensetzung (B) 600 °C bis 680 °C beträgt.

6. Zusammensetzung nach einem der Ansprüche 1 und 5, bei der die Zusammensetzung "B" gebildet wird durch, in Molprozenten :

   - 66% $SiO_2$ ;
   - 5,1 % $B_2O_3$ ;
   - 13,4% $Na_2O$;
   - 4,4% $K_2O$;
   - 10,1% $ZrO_2$ ;
   - 1 % $La_2O_3$;

   oder:

   - 74,9% $SiO_2$ ;
   - 12,9 % $Na_2O$ ;
   - 4,2% $K_2O$;
   - 7 % $ZrO_2$ ;
   - 1 % $La_2O_3$;

7. Glaszusammensetzung nach einem der Ansprüche 1 bis 6, die sich in Form eines Pulvers oder eines massiven Blocks präsentiert.

8. Verfahren für das Verbinden von wenigstens zwei Teilen, bei dem die folgenden Schritte realisiert werden :

   - man bringt die Teile in Kontakt mit einer Glaszusammensetzung nach einem der Ansprüche 1 bis 7 ;
   - man erhitzt das durch die Teile und die Glaszusammensetzung gebildete Ganze auf eine ausreichende Temperatur, um die Glaszusammensetzung zum Schmelzen zu bringen, um zwischen den Teilen eine Dichtung zu bilden ;
   - man kühlt den durch die Teile und die Dichtung gebildeten Verbund.

9. Verfahren nach Anspruch 8, bei dem der Schritt zur Herstellung des Kontakts der Teile mit der Glaszusammensetzung realisiert wird, indem man ein Pulver der Glaszusammensetzung herstellt, man dieses Pulver in einem organischen Bindemittel dispergiert, um eine Suspension oder Paste herzustellen, und mit der erhaltenen Suspension oder Paste wenigstens eine Oberfläche der zu verbindenden Teile überzieht.

10. Verfahren nach Anspruch 8, bei dem der Schritt zur Herstellung des Kontakts der Teile mit der Glaszusammensetzung realisiert wird, indem man ein Glasteil mit der Form der zu bildenden Dichtung herstellt, dann dieses Teil zwischen den Oberflächen der zu verbindenden Teile anordnet.

11. Verfahren nach Anspruch 10, bei dem das genannte Glasteil hergestellt wird, indem man ein Pulver der Glaszusammensetzung in einer der Form des Glasteils entsprechender Form verdichtet und dann sintert.

12. Verfahren nach Anspruch 10, bei dem das genannte Glasteil ein massiver Glasblock ist, hergestellt durch Direktguss der geschmolzenen Glaszusammensetzung in einer der Form des Glasteils entsprechender Form.

13. Verfahren nach einem der Ansprüche 8 bis 12, bei dem die zu verbindenden Teile aus einem Material sind, das ausgewählt wird unter den Metallen ; den Metalllegierungen ; den Keramiken ; und den mehrere der vorhergehend erwähnten Materialien umfassenden Kompositmaterialien.

14. Verfahren nach einem der Ansprüche 8 bis 13, bei dem die mindestens zwei zu verbindenden Teile aus verschiedenen Materialien sind.

15. Verfahren nach einem der Ansprüche 8 bis 14, bei dem die mindestens zwei zu verbindenden Teile Teile eines Hochtemperatur-Elektrolyseurs ETH oder einer Hochtemperatur-Brennstoffzelle SOFC sind.

16. Dichtung, hergestellt nach dem Verfahren nach einem der Ansprüche 8 bis 15.

17. Verbindung bzw. Verbund, hergestellt nach dem Verfahren nach einem der Ansprüche 8 bis 15.

18. Hochtemperatur-Elektrolyseur oder Hochtemperatur-Brennstoffzelle mit einer Verbindung nach Anspruch 17.

FIG.1

FIG.2

FIG.3

5 Cellule {
2 - Cathode 30-50μm
3 - Electrolyte 80-200μm
1 - Anode 30-50μm
}

≈300μm

FIG.4

FIG. 5

FIG. 6A

interface verre/metal

**FIG. 6B**

010170 retro 15.0kV    x2,000    10µm WD15mm

**FIG. 6C**

**FIG. 6D**

**FIG. 6E**

Interface verre/Cermet–Ni

**FIG. 6F**

**FIG. 7**

**FIG. 8**

**FIG. 9**

Test anneau fendu + verre JV36

**FIG. 10**

**FIG. 11A**

**FIG. 11B**

**FIG. 12**

**FIG. 13**

**FIG. 14A**

144 **FIG. 14B**

**EP 2 448 875 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5196277 A
- US 4921738 A
- WO 9605626 A1
- US 6430966 B1
- WO 9954131 A1
- WO 2006069753 A1
- US 6828263 B2

**Littérature non-brevet citée dans la description**

- **ZHENG R. et al.** *Journal of Power Sources,* 2004, vol. 128, 165-172
- **EICHLER K. et al.** *Journal of the European Ceramic Society,* 1999, vol. 19, 1101-1104
- **LOEHMAN R. et al.** Engineered Glass Composites for Sealing Solid Oxide Fuel Cells. *SECA Core Technology Program Review,* 11 Mai 2004
- **YANG Z et al.** *Solid State Ionics,* 2003, vol. 160, 213-225
- **LAHL N et al.** *Journal of Material Sciences,* 2000, vol. 35, 3089-3096